# EUROPEAN PATENT APPLICATION

(11) **EP 4 037 121 A1**
(43) Date of publication of application: **03.08.2022**
(21) Application number: 21154592.6
(22) Date of filing: 01.02.2021
(51) Int. Cl.: H02G 15/064, H01B 17/26, H02G 15/068, H02G 15/184, H02G 15/188

(54) **DRY CABLE FITTING**

(71) Applicant: Brugg Kabel AG, 5200 Brugg AG (CH)
(72) Inventor: Nassi, Andrea Giovanni, 5400 Baden (CH); Cisilino, Diego, 5043 Holziken (CH); Sun, Guoyan, 5234 Villigen (CH); Adili, Sedat, 8630 Rüti (CH)
(74) Representative: Keller Schneider Patent- und Markenanwälte AG

(57) **Abstract**

A cable fitting comprises an outer insulator (1) of tubular shape, a sliding contact (2), a terminal (3) and a preinstalled connecting element (4). The connecting element comprises a conductor (40) which is connected to the sliding contact (2) and which connects the terminal (3) of the cable fitting with the sliding contact (2). The sliding contact (2) is suitable to be connected to a cable conductor (131) of a high voltage cable (13). An insulating filling (5) fills the space between the connecting element (4) and the outer insulator (1) up to a filling level (50). The cable fitting comprises a preinstalled joint body (6). The joint body comprises a central electrode (61) surrounding the sliding contact (2) and a lower electrode (62), preferably in the shape of a deflector embedded in the joint body insulator (60) and opening towards the sliding contact (2), arranged at least partially below the central electrode (61). Further, the joint body comprises a cover (8) which extends at least from the height of the highest point of the lower electrode (62) up into the outer insulator (1). A geometric field control (7) comprises at least one inner electrode (70) and at least one outer electrode (71). All outer electrodes (71) are arranged below and outside the outer insulator (1) while a part of the joint body (6) is arranged inside the outer insulator (1).

## Description

### Technical Field

The invention relates to cable fittings for high voltage cables, comprising an outer insulator, a preinstalled connecting element, which connects a terminal of the cable fitting with a sliding contact suitable to connect a cable conductor and an insulating filling, filling the space between the connecting element and the outer insulator. The invention relates further to a method to produce such a cable fitting, to a method to install such a cable fitting on a cable end and to a cable end equipped with a cable fitting.

### Background Art

A dry-type, filled cable termination comprising an insulator housing is disclosed for example in the EP 2 712 473 B1. However, this termination does not comprise a preinstalled connecting element. Instead, the cable to be connected to the termination is directly connected to the terminal of the termination. A stress control element is arranged inside the insulator housing and adapted to be mounted on the high voltage cable. Due to the location of the stress control element in the inside of the insulator housing, a person installing the cable is very limited in its ability to control the correct placement of the stress control element on the cable. Further, the filling level is in this invention limited by the height of the stress control element: If the filling level would be above the stress control element, the insertion of the cable would be hindered by the filling. Because the filling has a higher dielectric strength compared to air, a lower filling level has to be compensated by a greater length of the insulator housing, resulting in a greater length of the cable termination.

The WO 98/45917 A1 discloses a different solution: Instead of using a rigid outer insulator to support the termination, a rigid conductive element surrounded by an insulating body is used to stabilize the termination. The cable is connected to this termination with a common joint body as usually used to connect two high voltage cables to each other.

While this termination allows to connect the cable in a well accessible place, the length of the final termination is increased because of the joint body. In addition, it has to be tested in the field if the joint body is properly connected to the rigid conductive element, its surrounding body and the coating.

Finally, the WO 97/09762 discloses a termination, which use a preinstalled rod-shaped conductor surrounded by an extended insulating body, which is connected to a contact sleeve. A contact plug is attached to the cable conductor. This contact plug is inserted into the contact sleeve and a specially adapted stress cone is arranged around this socket-plug connection. While length of the specially adapted stress cone is less than the length of a common joint body, the WO 97/09762 does not disclose the use of a filling implying the need for a long outer insulator to prevent electrical breakdowns in use. Further, the stress cone has to be tested and installed in the field, similar to the situation of the WO 98/45917A1.

### Summary of the invention

It is therefore the object of the invention to create a reliable dry-type cable fitting pertaining to the technical field initially mentioned, which is easy and fast to install on a cable end and requires no testing in the field.

The solution of the invention is specified by the features of claim 1. According to the invention the cable fitting comprises an outer insulator of tubular shape, a sliding contact, a terminal, a preinstalled connecting element, and an insulating filling.

The sliding contact is suitable to be connected to a cable conductor of a high voltage cable. The connecting element comprises a conductor. The conductor of the connecting element connects to the sliding contact with the terminal. Thereby, the combination the sliding contact and the conductor is suitable to connect the cable conductor of a high voltage cable to the terminal of the cable fitting.

The filling fills the otherwise unoccupied space inside the outer insulator up to a filling level. As the filling is electrically insulating it is the insulating filling.

The cable fitting comprises further a preinstalled joint body. The joint body comprises an elastomeric joint body insulator. The joint body insulator is preferably made of silicon rubber.

The joint body insulator is at least partially covered by a cover made of conductive or semiconductive material. Preferably, the cover extends at least from the height of an upper end of a lower electrode upwards into the outer insulator.

A cable fitting can be designed as a cable end termination, as a high-voltage outdoor cable end termination, as a high-voltage indoor cable end termination for example for a transformer or a gas insulated switchgear component, or as a high-voltage cable junction for connecting two high voltage cables together. Preferably, the cable fitting according to the invention is a termination suitable for high-voltage cables.

Preferably, the outer insulator is rigid.

Preferably, the joint body comprises further a central electrode. The central electrode surrounds the sliding contact. The central electrode is preferably embedded in the elastomeric joint body insulator.

The joint body comprises further a lower electrode. The lower electrode is at least partially arranged below the sliding contact. Preferably, the lower electrode is at least partially arranged below the central electrode. The lower electrode has preferably the shape of a deflector opening towards the central electrode or the sliding contact. Preferably, the lower electrode is embedded in the joint body insulator.

The cable fitting comprises further a geometric field control. The geometric field control comprises at least one inner electrode and at least one outer electrode. All of the inner electrodes are located inside the outer insulator. All of the outer electrodes, and preferably the sliding contact, are arranged outside the outer insulator. A part of the joint body is arranged inside the outer insulator and a part of the joint body is arranged outside the outer insulator.

Preferably, the outer electrodes of the geometric field control are part of the joint body. Preferably, the lower electrode is one of the outer electrodes and preferably in addition the central electrode is one of the outer electrodes.

Preferably, the boundaries of the joint body are defined by the boundaries of the joint body insulator. The joint body is preferably suitable to receive the high voltage cable as well as the connecting element. The joint body's shape is such that the joint body is pushed onto a connected high voltage cable by the elastomeric properties of the joint body itself.

In order to clearly identify the position of different parts relative to each other, this description uses term such as "top" / "bottom", "above" / "below", "lower"/"upper", "down"/"up". In the sense of this description, the end where the cable is connected to the cable fitting is the lower end of the cable fitting, while the terminal of the cable fitting is on its upper end, even if the cable fitting might be oriented differently with respect to the plumb line.

The outer insulator is of tubular shape and comprises therefore openings at its top and bottom and a hollow interior, which connects the opening at the top and at the bottom. Everything in this hollow interior connecting the opening at the top and at the bottom is inside the outer insulator. Preferably, the openings are areas of the convex hull of the outer insulator whereby every point of one opening can be connected with a straight line with a point of the other opening without this straight line crossing the outer insulator between the two openings.

For example, in the case of an outer insulator in the shape of a tube with constant diameter and constant wall thickness, the convex hull is a cylinder with a constant diameter and everything above the lower end, below the upper end and surrounded by the tube is considered to be inside this outer insulator. The openings at the top and at the bottom of this outer insulator are circles with a radius equal to the inner diameter of the outer insulator.

A sliding contact is a contact, which allows to establish an electrical contact and a mechanical connection between two high voltage conductors without direct access to the sliding contact. It may be necessary to mount an adapter piece to the cable conductor before it is inserted in the cable fitting in order to create the electrical and mechanical connection with the sliding contact. For example, the sliding contact and the adapter piece can form a snap-in connection while being made of conductive material.

A geometric field control is an arrangement of electrodes which are shaped in such a way that the electric field is shaped in a desired way and that, in particular, the electric field strength remains everywhere well below the dielectric strength of the employed materials. In the cable fitting, the geometric field control controls the electric field in the region between the end of the outer semiconductive layer of the high voltage cable and the terminal of the cable fitting.

A direct electrical contact or a direct contact between two components is here and in the following a mechanical connection of the components, which establishes at the same time an electrical contact such that both components are on the same electrical potential during the use to the cable fitting. It is also a direct contact if the two components are constructed from the same piece: For example, a coating forming the cover in a first section of the joint body can be continued further inside the joint body to become a deflector arrangement and in such a case then cover and the deflector arrangement are in direct electrical contact with each other because they belong to the same piece. An indirect electrical contact or an indirect contact between two components is here and in the following an electrical contact established by at least one third component: The two components, which are in indirect contact do not touch each other, but due to the presence of at least one conductive or semiconductive element, which is in direct electrical contact with at least the two components and either a further element or the second component, they are on the same electrical potential during the use of the cable fitting.

Here and in the following the term "potential" refers to the electric potential.

A semiconductive material has, here and in the following, an electrical conductivity value falling between that of a conductor, such as metallic copper, and an insulator, such as glass.

A rigid material is here and in the following a material which allows the part it is made from to support at least itself and preferably further parts which are attached to it. When being subject to forces occurring during normal use of a cable fitting, the rigid parts do not change their shape significantly. Preferably, a material is assumed to be rigid in the sense of this invention if its Young's modulus at 20°C is above approximately 1 GPa.

The use of a preinstalled connecting element allows a high filling level and a prefabrication and pretesting of the geometric field control and the cable fitting. This allows a compact and reliable design. Both effects are further enhanced by the use of a preinstalled joint body, which is partially inside the outer insulator: Preinstalling the joint body allows to place the joint body on the connecting element before it is inserted in the outer insulator. Therefore, the joint body and connecting element are well accessible at this time and the placement can be tested comfortably. Arranging the joint body partially inside the outer insulator saves space and reduces the amount of insulating material needed as the joint body insulator fills some of the space, which would otherwise be filled with the insulating filling. In addition, arranging the joint body partially inside the outer insulator allows a reliable connection between the outer insulator and the joint body: As the electric field is controlled by the joint body in the region around the sliding contact and as the joint body insulator is elastomeric, the field control is preserved even if the connecting element or the connected cable moves slightly with respect to the outer insulator due to thermal effects or mechanical loads. Arranging the sliding contact and the lower electrode of the joint body outside of the outer insulator allows the person installing the cable fitting to do so in the same way as a conventional joint body is installed. It is in particular possible to see that the lower electrode is placed correctly onto the cable.

Therefore, the arrangement of the joint body and the geometric field control according to the invention allows a compact and reliable high voltage cable fitting, which is comfortable to install.

The cable fitting according to the invention is preferably used for voltages up to 550kV. The length of the outer insulator is in the invention given by the air-length of the applied voltage. There is only a small increase in the length needed to allow the cable to be connected outside of the outer insulator. However, as the joint body is partially integrated, this increase is less than in cases where the joint is realized outside of the outer insulator entirely. The use of a connecting element minimized the length of the cable, which needs to be prepared to establish the connection to the cable fitting: typically only about ¼ of a common length is needed or even less.

Preferably, the lower electrode is intended to be in electrical contact with the outer semiconductive layer or the sheath of the connected high voltage cable and therefore on the electric potential of the outer semiconductive layer or the sheath of the connected high voltage cable during use.

Preferably, the central electrode is in electrical contact with the sliding contact and therefore on the potential of the cable conductor of the high voltage cable during use.

The cover is preferably a conductive or semiconductive paint, which is applied onto the joint body insulator. In another embodiment, the cover is applied in the form of tapes wrapped around or applied onto the joint body. In another embodiment, the cover is applied in the form of a sleeve arranged around or onto the joint body. In another embodiment, the cover is a made of elastomeric, conductive or semiconductive material which is moulded to the joint body insulator.

In one embodiment, the cover is in direct or indirect electrical contact with a fixing flange mounted to the lower end of the outer insulator.

The cover is preferably either in direct or indirect electrical contact with the at least the lower electrode and in this way on the same electrical potential as the lower electrode during use. The cover is preferably either in direct or indirect electrical contact with the outer semiconductive layer or the sheath of the connected high voltage cable and in this way on the same electrical potential as the lower electrode during use.

In one embodiment, the cover is used to establish an electrical contact between the fixing flange and the lower electrode.

In some embodiments, the cover forms the lower electrode.

The cover is preferably either in direct or indirect electrical contact with the at least one inner electrodes and in this way on the same electrical potential as this inner electrode during use.

In one embodiment, the cover is used to establish an electrical contact between the fixing flange and at least one of the inner electrodes.

In some embodiments, the cover forms at least one of the inner electrodes.

In one preferred embodiment, the cover is in either direct or indirect electrical contact with the fixing flange and all inner electrodes, thereby ensuring that fixing flange, cover and the inner electrodes are on the same potential, while the lower electrode is isolated from this group by the joint body insulator. The lower electrode is designed to be in direct or indirect electrical contact with the outer semiconductive layer or the cable sheath of a high voltage cable, once such a cable is connected to the cable fitting. Therefore, the lower electrode can, in this embodiment, be on a potential different from the one of the cover, the fixing flange and the inner electrodes.

In one embodiment, the cover itself is part of the geometric field control, being partially an inner electrode and partially an outer electrode.

In a preferred embodiment, the cover forms the lower electrode, the outer electrode and all inner electrodes.

As the cover is preferably on the same electrical potential as at least one of the inner electrodes and on a similar potential as the lower electrode and surrounds the central electrode, it controls the electric field between the lower, the inner and the central electrode inside the joint body.

Further, the cover is a convenient way in some embodiments to ensure that at least one of the inner electrodes of the geometric field control is on the same potential as the fixing flange, which is during use typically on ground potential.

In a preferred embodiment, the lower electrode and at least one of the inner electrodes and the cover are on ground potential. In a preferred embodiment, the fixing flange is conductive or semiconductive and grounded.

In a preferred embodiment, the cover covers the joint body on its outside completely. This has the advantage that the contact between the cover and the outer semiconductive layer of the high voltage cable to be connected can be easily established. For example the compression force exerted by the joint body on the high voltage cable, once it its connected, can be sufficient to establish a direct contact between the cover and the outer semiconductive layer of the high voltage cable.

In one embodiment, the lower electrode, and preferably the central electrode, is a made of elastomeric, conductive or semiconductive material and is embedded in the joint body insulator.

Preferably, the lower and the central electrode as well as further electrodes of the joint body are realised by the material of the joint body insulators, which is made conductive or semiconductive by suitable additives, such as carbon black.

As the electrodes and the joint body insulator have similar mechanical properties, the reliability is increased by this choice of the material and this arrangement of the electrodes.

In one embodiment, the joint body insulator comprises a lower end and this lower end is conical such that its diameter increases with decreasing distance to the sliding contact. In this embodiment, the lower end is covered by the cover.

The embodiment facilitates the electrical contact between the outer semiconductive layer or the sheath of the connected high voltage cable and the cover and minimizes the volume of the joint body insulator, reducing weight and costs.

Preferably, the cover of the lower end forms the lower electrode of the joint body and at least one of the outer electrodes of the geometric field control.

As the outer shape of the lower end of the joint body can resemble a deflector and the cover can be a lower electrode in the shape and function of a deflector, this embodiment minimizes the need for further electrodes.

In another embodiment, embedding the lower electrode in the shape and function of a deflector in the elastomeric joint body insulator allows to use the pressure exerted by the joint body onto the connected high voltage cable to press an embedded lower electrode in the form of a deflector against the outer semiconductive layer or the sheath of the connected high voltage cable more efficiently when in use. This is an easy and reliable way to establish an electrical contact between the lower electrode and the outer semiconductive layer or the sheath of the connected high voltage cable when in use.

In a preferred embodiment of a cable fitting the inner electrode of the geometric field control comprises a continued electrode. The continued electrode comprises a cylindrical part. The cylindrical part continues the cover or the cylindrical part is at least partially arranged coaxially to the cover. The continued electrode comprises further either a conical part which is widening towards the terminal or the continued electrode comprises a rounded upper end.

In this embodiment, the field control of the cover is extended in longitudinal direction by the cylindrical part of the continued electrode.

In one embodiment, the cylindrical part has a constant cross-section along it longitudinal extent.

However, the cross-section may also vary for example to facilitate the mounting of the continued electrode or to ensure that a desired geometry of the conical part fits inside a given outer insulator.

In one embodiment, the cylindrical part reduces its diameter with increasing height before the diameter widens again in the conical part. If such a continued electrode is arranged abutting to the cover or partially coaxially inside the cover, the continued electrode is a deflector arrangement.

In some embodiments, the extension of the field control is realised by the continuation of the cover. A continuation of the cover implies that the cylindrical part of the continued electrode abuts the end of the cover. In a simple case of a continuation of the cover, the cylindrical part, and preferably also the conical part of the continued electrode, is simply a section of the cover. In another case of a continuation of the cover, the cover is made of a conducting or semiconducting tape which is in a contact region wrapped on a metallic cylinder forming the cylindrical part of the continued electrode.

In some embodiments, the extension of the field control is realised by providing a region in which the cover and the cylindrical part of the continued electrode overlap each other while being arranged coaxially. This coaxial arrangement implies that the upper end of the cover is above the lower end of the continued electrode. Further, either the cover surrounds the continued electrode at least partially or the continued electrode surrounds the cover at least partially. In this way, either the upper end of the cover is in a region shielded by the continued electrode or that the lower end of the continued electrode is shielded by the cover. There is consequently no gap in the shield and the electric field remains, in radial direction, restricted to the volume surrounded by at least one of cover and continued electrode.

The rounded upper end or the conical part of the continued electrode reduces the density of electric field lines between the continued electrode and the terminal and therefore the local electric field strength, increasing the reliability of the cable fitting.

In one embodiment, the at least one inner electrode of the geometric field control comprises the deflector arrangement. Preferably, the deflector arrangement is embedded in an elastomeric deflector arrangement insulator, preferably silicone rubber or in the filling.

A deflector is a conductive or semiconductive, rotationally symmetric body with an inner and an outer boundary with monotonically increasing distance to the rotation axis with increasing distance from a starting point on the rotation axis such that a conically shaped structure with a tube-like tip region results. A deflector is arranged coaxially to the connecting element or, if the terminal is in use, to the high voltage cable connected to it. Deflectors are, during use, typically on a low potential or even grounded. They are typically arranged in such a way that the tip region point away from the region with high electric potential they are associated with. In the following, the direction of the longitudinal axis in which the outer diameter of the deflector increases with increasing distance to the starting point is the direction in which the deflector opens.

Using the convention of this document, that the end of the cable fitting where the cable is connected is lower than the terminal of the cable fitting, a deflector which is arranged below the high electric potential region it is associated with is called an "opening deflector". A deflector which is arranged above the high electric potential region it is associated with is called a "closing deflector". Deflectors are electrodes.

A deflector arrangement is a combination of a closing deflector arranged directly below an opening deflector.

In one embodiment, opening and closing deflector are formed in a single piece. In this embodiment, the section of the deflector arrangement which resembles a closing deflector is called the lower part of the deflector arrangement while the section with resembles an opening deflector is called the upper part of the deflector arrangement.

Preferably, all electrodes of the deflector arrangement are in direct or indirect electrical contact with each other and therefore they are all on the same potential when in use.

In another embodiment, the opening and the closing deflector of the deflector arrangement are separate pieces which are preferably in direct or indirect electrical contact with each other. Preferably, the deflector arrangement comprises an opening and a closing deflector which are separate pieces but in electrical contact with each other by being pressed onto a conductive or semiconductive layer surrounding an insulating layer of the connecting element at a suitable place. In one embodiment, the deflector arrangement comprises an opening and a closing deflector which are separate pieces but in electrical contact with each other by being pressed onto each other.

In one embodiment, the deflector arrangement is realised by a conductive or semiconductive cover of a section of the joint body, which has a suitable hourglass shape. The hourglass shape is suitable if the resulting defector arrangement can control the electric field in the desired way. Preferably, the cover of this hourglass shaped section of the joint body is part of the cover. This allows to contact the deflector arrangement at a well accessible position to bring it on a desired low potential. Preferably, the cover of the joint body extends at least from the height of the upper end of the lower electrode up to at least the height of the lower end of the deflector arrangement. Preferably the closing deflector or the lower part of the deflector arrangement is embedded in the joint body. This has the advantage that the electric field associated with the central electrode is controlled in a symmetric way, which facilitates the design and the production.

The design of the opening deflector or the upper part of the deflector arrangement can be adapted to the requirements of the electric field inside the outer insulator and produced by the potential difference between the terminal and the deflector arrangement. Therefore, the use of a deflector arrangement has the advantage of facilitating the design process.

In one embodiment, the deflector arrangement is at least partially embedded in an elastomeric deflector arrangement insulator, preferably silicone rubber. Preferably, the elastomeric deflector arrangement insulator is the same as the joint body insulator. Preferably, at least the closing deflector or the lower part of the deflector arrangement is embedded in the joint body insulator which acts as deflector arrangement insulator in this case.

In one preferred embodiment, the filling is in direct contact with the opening deflector or the upper part of the deflector arrangement everywhere except for the sections in direct contact with the connecting element and/or the closing deflector. Preferably, the closing deflector or the lower part of the deflector arrangement is embedded in the joint body insulator in this embodiment. Therefore, the deflector arrangement insulator is partially the joint body insulator and partially the filling.

If the deflector arrangement comprises a closing deflector and if the closing deflector is embedded in the joint body insulator and if the cable fitting comprises in addition a lower electrode in the form of a deflector embedded in the joint body insulator, the joint body of the cable fitting has a symmetric geometry and resembles the joint bodies which are used to connect two high voltage cables. Being able to use components which multiple uses such as these joint bodies facilitates the production of the cable fitting.

In one embodiment, the opening deflector of the deflector arrangement is embedded in a deflector arrangement insulator forming a stress cone. The geometric field control of one embodiment is established by arranging a suitable stress cone and a joint body with symmetric geometry onto the connecting element connected to the sliding contact.

In one embodiment of a cable fitting comprising a deflector arrangement, the connecting element comprises, at least in a lower section, an insulating layer on its outside. In this embodiment, the deflector arrangement is arranged onto the lower section of the connecting element in such a way that an electrical contact between the conductor and the deflector arrangement is prevented by the insulating layer. Preferably, the connecting element comprises at least partially a conductive or semiconductive layer surrounding the insulating layer on its outside, which establishes an electrical contact with all deflectors of the deflector arrangement.

In this embodiment, at least the lower section of the connecting element has a similar design as a high voltage cable and consequently, the deflector arrangement can be designed in a similar way as it is known from cable joints. In particular, it is the insulating layer of the connecting element and not only the deflector arrangement insulator, which prevents an electrical contact between the conductor and the deflector arrangement. This embodiment is from a manufacturing point of view preferable as the connecting element can be fabricated as endless product because the outer diameter of the insulating layer is constant. Further, the placement of the deflector arrangement while moulding the joint body and/or the stress cone is easily archived by placing the deflectors on a mandrel, which replaces the connecting element for the moulding process. If the resulting joint body or stress cone is later slipped onto the connecting element comprising an insulating layer, the deflectors are arranged in precisely the desired distance to the conductor. It is a further advantage that a conductive or semiconductive layer can be applied on top of the insulating layer and that this conductive or semiconductive layer can be used to contact the deflector arrangement and to bring all of its electrodes to the desired potential during use.

In one embodiment, the deflector arrangement comprises a closing deflector which opens towards the sliding contact and which is part of the joint body. The deflector arrangement according to this embodiment comprises further an opening deflector opening towards the terminal of the cable fitting. Preferably, an electrical contact is established between the closing and the opening deflector. Preferably the opening and/or the closing deflector are both made of elastomeric, conductive or semiconductive material. Preferably, the opening deflector is part of a stress cone.

In one preferred embodiment, the opening deflector is positioned onto the connecting element without being previously embedded in an elastomeric insulator. This embodiment has the advantage of facilitating the production as there is no need to produce a stress cone.

In one embodiment the deflector arrangement comprises a combined deflector. The combined deflector comprises a lower part opening towards the sliding contact and an upper part opening towards the terminal of the cable fitting. The combined deflector is preferably made of elastomeric, conductive or semiconductive material and is part of the joint body.

In one embodiment, the deflector arrangement is realised by the cover of an hourglass shaped section of the joint body, which is arranged inside the outer insulator.

In one embodiment, the joint body continues cylindrically and with a constant diameter inside the outer insulator. This section of constant diameter is followed by a conical section widening towards the terminal. The cover extends in this embodiment along the joint body forming thereby a continued electrode.

This embodiment is particularly easy to produce as the joint body has a monotonically increasing outer surface which facilitates the production and design of the mould. Further, all electrodes needed can be produced by coating this joint body and/or by embedding them in the joint body during the moulding process.

In one embodiment, the continued electrode comprises a self-supporting electrode. The self-supporting electrode is made of a conductive or semiconductive, rigid material, preferably a metal. The self-supporting electrode extends from the height of the lower end of the outer insulator upwards inside the outer insulator. An upper end of the self-supporting electrode is preferably rounded. Preferably, the self-supporting electrode surrounds a part of the joint body comprising the cover and being inside the outer insulator.

In one embodiment, the self-supporting electrode contacts the cover.

As the self-supporting electrode is rigid, it can be mounted to the outer insulator or to the fixing flanges and does not need to be supported by the connecting element or the joint body. The possibility to install the inner electrodes independent of the joint body can increase the reliability and can facilitate the production.

The self-supporting electrode may continue the cover or may be arranged coaxially to the cover inside the outer insulator along a part of its length. It is, preferably, over most of its length surrounded by the filling.

Via the cover and/or the fixing flange and/or other conductor elements, the self-supporting electrode can be set to a desired low potential.

The joint body used in combination with a self-supporting electrode can be homogeneously insulating inside the outer insulator. In this embodiment, the self-supporting electrode can be the only inner electrode.

However, the joint body used in combination with a self-supporting electrode can comprise also a closing deflector. In this embodiment, the self-supporting electrode acts as opening deflector. This is an example for the use of a self-supporting electrode in a geometric field control, which separates the fields associated with the central electrode and the terminal.

In one embodiment, the insulating filling is made of a gel or a solid, preferably an elastomer, such that the resulting cable fitting is a dry-type fitting, wherein the gel or the solid is formed by curing a precursor material of the gel or the solid.

Forming the filling by curing a precursor material ensures in a reliable way that the entire unoccupied volume inside the outer insulator is up to the filling level filled with insulation material. As the material can be cured to become a gel or a solid, the filling can be molded and cured in the factory, where the cable fitting can be tested. Further, as neither the gel nor the solid flows, the cable fitting can be stored and transported in any orientation.

The precursor material is preferably a liquid or a granular material or a mixture of both.

Preferably the precursor material is liquid, as a liquid can flow in channels and indentations with a width smaller than the particle size of a granular material. If a granular material is used, the curing process is preferably controlled in such a way that there is a timespan during which the precursor material is liquid which is sufficiently long to fill in all gaps which could not be filled by the grains.

Using an elastic solid or a gel allows the filling to adapt to thermal expansion and to small mechanical loads without creating voids or cracks.

Preferably, the gel has elastic properties.

Preferably, the filling is an insulating gel. Preferably, the insulating gel is based on silicone or polyurethane. Preferably, it is casted and cures at room temperatures in a curing time of for example 24 hours.

In one embodiment, the joint body is mounted to the outer insulator partially by using the insulating filling as adhesive and partially by the press fit with which the joint body sits on the connection element while the connection element it mounted to a lid which is mounted to the outer insulator.

The adhesive properties are enhanced by the fact that the filling prevents the formation of air pockets on the upper end of the joint body resulting in the ambient atmospheric pressure pushing filling and joint body together.

Silicon rubber is preferably used as joint body insulator and porcelain, a plastic or a composite material, such as glass fiber reinforced epoxy, is preferably used for the outer insulator.

The insulating filling is preferably a silicone based gel or a polyurethane based gel.

By using the elastic insulating filling to partially mount the elastomeric joint body to the, preferably rigid, outer insulator, the boundary between elastic material and rigid material is formed between the filling and the outer insulator. This boundary is formed by moulding and curing and has therefor a strong adhesive contact over a large surface area. Further, the elastic properties of the filling can compensate and distribute stresses resulting from thermal expansion or mechanical loads. In reaction to such stresses, the filling can expand through the lower end or above the filling level. The resulting cable fitting is consequently particular reliable.

Preferably, the joint body is mounted in such a way to the outer insulator that the joint body can move relative to the outer insulator by up to 5%, preferably by up to 2% of the total length of the cable fitting, measured from the lowest end of the joint body to the upper end of the terminal. This is especially archived by the use of an adhesive, but elastic filling. This embodiment allows the cable fitting to compensate differences in the thermal expansion. The resulting cable fitting is consequently particular reliable.

In one embodiment, a fixing flange is connected to the lower end of the outer insulator and a lid is connected to the upper end of the outer insulator. The terminal of the cable fitting is mechanically fixed by the lid. In this way, the outer insulator acts as mechanical support of the cable fitting.

This cable fitting is mounted to the desired infrastructure by the fixing flange. The fixing flange allows to fix the cable fitting relative to the device to be connected to the cable or relative to the high voltage cable to be connected.

For example, the fixing flange may be a metallic plate in the shape of a ring having an inner diameter similar to the inner diameter of the outer insulator and an outer diameter greater than the outer diameter of the outer insulator. The outer insulator is fixed on such a fixing flange for example by an adhesive or by screws. Along its outside edge, the fixing flange may be equipped with features facilitating a mounting such as holes, recesses or bolts.

As the terminal is fixed by the lid and as the connecting element is fixed to terminal, the connecting element is in this way positioned on both of its ends. Consequently, the connecting element can be flexible and does not need to be self-supportive. For example, the connecting element can be a realized by a section of a high voltage cable, reducing the need to produce specially designed connecting elements only for the use in cable fittings according to the invention. This reduces the costs and increases the reliability.

In one embodiment, the joint body is mounted to the outer insulator essentially only by the connection element which is mounted to the outer insulator via the lid. In some embodiments, the fixing flange supports the joint body such that the joint body is mounted to the outer insulator via the fixing flange. Therefore, a fixing flange mounted to the lower end of the outer insulator can support the whole cable fitting.

Further, the fixing flange may be grounded and in electrical contact with the cover of the joint body, the self-supporting electrode, the conductive or semiconductive layer surrounding the insulating layer of the connecting element, the deflector arrangement and/or further inner or outer electrodes. These electrical contacts are preferably established during the fabrication of the cable fitting, if needed by using suitable conductor elements, and they are already tested before the cable fitting is shipped to the installation site. This increases the reliability.

According to one embodiment, the filling level is such that all inner electrodes are embedded in the filling. In this embodiment, there is a direct contact between the connecting element and the filling.

This has the advantage that the electrodes and the connecting element are in radial direction supported by the filling. Further, the electric field strength is in many cases highest at the boundary between the inner electrodes and the surrounding insulation. Covering the electrodes completely with filling ensures that the properties of the insulator which needs to withstand these field strengths are well known. Therefore, the resulting cable fitting is more reliable.

While in general, a higher filling level is desirable as it allows the use of a shorter outer insulator and therefore a more compact cable fitting, reducing the filling level allows to reduce the weight and the costs of the cable fitting if a lower voltage rating than used for the original design is required.

Preferably, the length of the outer insulation is chosen to be the minimal length which ensures that there is no breakdown between the terminal of the cable fitting during nominal use of the cable fitting and the fixing flange and the filling level is chosen such that, in this geometry and with a given filling, there is no breakdown between any one of the inner electrodes and the terminal.

For example, if the dielectric strength of the filling is 10-times the dielectric strength of the air in the worst case of nominal environmental conditions, the distance between the highest end of one of the inner electrodes and the filling level is chosen to be 1/10^{th} of the distance between the fixing flange and the terminal.

In this embodiment, the cable fitting is particularly compact and light.

Leaving a certain volume in the upper part of the cable fitting unfilled gives the filling additional space for thermal expansion. Further, a connection piece is preferably arrange in the space between the filling level and the lid as the connection to the terminal in protected from the environment and still accessible to allow adaptions of the terminal to the situation in which the cable fitting should be used.

In one embodiment, the connecting element is connected to the terminal of the cable fitting using a connection piece. The connection piece is preferably arranged above the filling level.

If a connection piece is used to connect the terminal to the connecting element and if this is arranged above the filling level, it allows to change the terminal and to adapt it to the customer's needs.

In one embodiment, the conductor of the connecting element is a wire rope, a metallic tube or a metallic rod.

The conductor of the connecting element conducts the electricity from the sliding contact to the terminal. A wire rope is more flexible than a tube or a rod, a tube can dissipate heat more easily, while a rod has the greatest conductive cross-section at a given outer diameter. Preferably, the connecting element is an intermediate product of a high voltage cable production. Preferably, the conductor of the connecting element is the conductor of a section of a high voltage cable. Preferably, the insulating layer of the connecting element is the insulation layer of a section of a high voltage cable.

Using intermediate products of the high voltage cable production makes the production and stock-keeping more efficient.

In one embodiment, the outer insulator is made of composite material, preferably comprising silicone sheds on its outside, or wherein the outer insulator is made of porcelain.

The composite material is preferably fibre reinforced epoxy, especially glass fibre reinforced epoxy.

Porcelain and fibre reinforced epoxy are materials with well-known insulating properties, which can be used to construct self-supporting tubes which are resistant to weathering and UV-radiation. Therefore, a cable fitting with an outer insulator constructed from these materials is reliable, self-supporting and suitable for outdoor use. A cable fitting with an outer insulator made of composite material is lighter and therefore easier to install. The use of silicon sheds implies that the sheds have a certain flexibility, which decreases the risk of sheds breaking off while handling the cable fitting.

A cable fitting with an outer insulator made of porcelain allows the sheds and the tubular part of the outer insulator to be made of a single piece, which results in an even higher and long lasting reliability in adverse weather. Further, porcelain is very resistant against damages caused by animals.

In one embodiment, the outer insulator is made of plastic material. This facilitates the production of the outer insulator.

A cable end according to the invention comprises a cable fitting according to the invention and a high voltage cable. The high voltage cable comprises a cable conductor, an insulation layer made of a polymer surrounding the cable conductor, an outer semiconductive layer surrounding the insulation layer and a protective layer surrounding the outer semiconductive layer. In addition, the high voltage cable comprises preferably, an inner semiconductive layer in direct contact with and surrounding the cable conductor. Such inner semiconductive layer is arranged between the cable conductor and the insulation layer. Further, the high voltage cable comprises preferably a cable sheath surrounding the outer semiconductive layer. If present, such cable sheath is arranged between the outer semiconductive layer and the protective layer.

The lower electrode contacts part of the outer semiconductive layer or part of the cable sheath. The contact between the lower electrode and the outer semiconductive layer or the cable sheath is preferably established by arranging the lower electrode onto the outer semiconductive layer or onto the cable sheath.

The cable conductor contacts the conductor of the connecting element through the sliding contact which establishes a current path.

The cable conductor contacts, at least indirectly, the central electrode in such a way that cable conductor and central electrode are both on the same electric potential. Preferably, the central electrode is arranged onto the sliding contact and the outside of the sliding contact is in electrical contact with the inside of the sliding contact, while the inside of the sliding contact is in electrical contact with the cable conductor and/or the conductor of the connecting element.

Preferably, the sliding contact comprises a tubular section made of conductive material, which is equipped with conductive means to fix and to contact the cable conductor and the conductor of the connecting element. The cable conductor and/or the connecting element can be equipped with adapter pieces, which allow to establish the desired mechanical and electrical contact with the sliding contact. Preferably, the adapter pieces are conductive. Therefore, essentially the whole sliding contact is on the potential of the cable conductor connected to it.

Preferably, the cable sheath and/or the outer semiconductive layer contacts, directly or indirectly, the cover and/or the protection box.

The method to fabricate a cable fitting according to the invention comprises the following steps:
Preferably, connecting the conductor of the connecting element to the sliding contact.

Preferably, testing all electrodes which will be in direct contact with either the insulation layer of the high voltage cable which is connected to the cable fitting during use or the insulating layer of the connecting element. Preferably, the step of testing all electrodes of the geometric field control. Preferably, the method comprises further the step of testing the direct and indirect contacts which are established by the cable fitting itself.

Arranging the geometric field control and the joint body on or around the connecting element and the sliding contact.

Arranging the outer insulator in the desired position with respect to the joint body and the connecting element.

In some embodiments, the geometric field control is completely integrated in the joint body and therefore the step of arranging the geometric field control and the joint body comprises only the arrangement of the joint body.

In some embodiments, especially if the geometric field control comprises a self-supporting electrode, the step of arranging the geometric field control around the connecting element includes the mounting of at least parts of the inner electrodes to the inside of the outer insulator and arranging the outer insulator in the desired position with respect to the joint body.

In some embodiments, especially if the geometric field control comprises a self-supporting electrode, the step of arranging the geometric field control around the connecting element includes the mounting of at least parts of the inner electrodes to the fixing flange, mounting the fixing flange to the outer insulator, and arranging the outer insulator in the desired position with respect to the joint body.

In some embodiments, especially if the geometric field control comprises a self-supporting electrode, the step of arranging the geometric field control around the connecting element includes the mounting of at least parts of the inner electrodes to the joint body.

Preferably, the geometric field control and the electrical contact between the sliding contact and the conductor of the connecting element are tested after the geometric field control is arranged with respect to the connecting element and the sliding contact. If this testing is done before the precursor material of the filling is filled in, the accessibility is still given and a repair or replacement is easily possible, if needed.

The testing can be done before or after the outer insulator is arranged with respect to the joint body and the connecting element. If the outer insulator is not needed to arrange the geometric field control with respect to the connecting element and the sliding contact, the testing is preferably done before the outer insulator is arranged with respect to the joint body and the connecting element, as the accessibility is even better this way.

In some embodiments, conductor elements suitable to ground at least some of the electrodes of the geometric field control are connected to the respective electrodes and arranged in a desired way between the electrodes, out of the outer insulator or these conductor elements are brought into direct contact with the fixing flange, if applicable.

If needed, a sealing is arranged between the lower end of the outer insulator and the joint body. The purpose of the sealing is to prevent the precursor material of the filling to flow out of the outer insulator. Once the filling is cured, the sealing is not needed anymore and it is preferably removed to allow the filling to react to thermal changes. However, in some embodiments, the sealing is made of an elastic or elastomeric material, for example silicon rubber, and remains at the lower end of the outer insulator after the filling is cured. In some embodiments, the sealing is made of the cured filling material.

Depending on the outer circumference of the joint body and the inner diameter of the outer insulator at the lower end of the outer insulator, the space between the two parts can be sufficiently small to keep the precursor material of the filling inside the outer insulator. In other embodiments, the fixing flange reduces the free space between the parts at the lower end of the outer insulator sufficiently to stop the precursor material of the filling. In these cases, a sealing is not needed and is preferably omitted.

In a preferred embodiment, the sealing is realised by a support, which holds the joint body and the outer insulator in the desired arrangement with respect to each other during the moulding process of the filling.

Once the joint body, the geometric field control, the connection element, the outer insulator and, if needed, the sealing are arranged in the desired way and, in a preferred embodiment, tested, a precursor material of the insulating filling is poured in the outer insulator. Thereby, the unoccupied space between the outer insulator and the connecting element and the joint body and possibly further inner electrodes is filled with the precursor material of the insulating filling.

The precursor material of the insulating filling is cured. The insulating filling results which is a gel or a solid and which fills the outer insulator up to the filling level.

In one embodiment, the curing includes the step of conducting a current through the connecting element which produces heat thereby and wherein this heat is used for the curing. At the same time, for example, by monitoring the temperature and/or resistivity development during this process, the cable fitting is tested.

Preferably, the terminal of the cable fitting is connected to the connecting element, the lid is mounted on the upper end of the outer insulator and the terminal of the cable fitting is mounted to the lid. Preferably, the terminal is connected after the filling is produced by curing the precursor material.

However, in some embodiments, the terminal is mounted at an earlier step in the process and the terminal is used to position the connecting element during the moulding and curing of the filling.

Preferably, the cable fitting is electrically tested before it is delivered to the installation site. As all the geometric field control electrodes, the connecting element and the filling are already arranged as they will be on the field during use of the cable fitting, all aspects of the cable fitting with the only exception being the connection to the high voltage cable, can be tested in the laboratory in advance.

The method for installing a cable fitting according to the invention on a dry-type high voltage cable comprises the following steps:
The cable conductor of the high voltage cable is exposed over a distance of approximately half of the length of the sliding contact. Preferably, the cable conductor is prepared with a suitable adapter piece to connect the cable conductor to the sliding contact.

The insulation layer of the high voltage cable is exposed over a distance approximately equal to the distance between the lower end of the sliding contact and upper end of a contact region of the lower electrode

The contact region of the lower electrode is a region where the lower electrode is exposed and not covered by a joint body insulator layer on the inside.

The outer semiconductive layer and/or shield layer of the high voltage cable is exposed such that an electrical contact between the cable shield and/or the outer semiconductive layer of the high voltage cable and the lower electrode of the joint body can be established once the cable is connected to the sliding contact. The extent of the exposed outer semiconductive layer and/or shield layer is therefore preferably about the same as the extent of the contact region of the lower electrode.

The cable, prepared by the previous steps, is pushed into the joint body such that the cable conductor of the high voltage cable is connected to the sliding contact.

By pushing the prepared cable into the joint body all necessary connections can be realised: The sliding contact establishes the current path and ensures that the central electrode will be on the high potential of the cable conductor in use. The contact between the lower electrode and the outer semiconductive layer and/or the shield layer of the cable ensures that the lower electrode is on the desired lower potential. Therefore, two outer electrodes of the geometric field control, the central electrode and the lower electrode, are contacted as intended.

Preferably, a protection box or a protection sleeve is mounted over the part of the joint body which is outside of the outer insulator in a final step. The protection box of the protection sleeve protects the exposed part of the joint body and the connected cable end from mechanical damages and environmental conditions such as rain and UV-radiation.

Other advantageous embodiments and combinations of features come out from the detailed description below and the entirety of the claims.

### Brief description of the drawings

The drawings used to explain the embodiments show:
- Fig. 1: A cable end with a cable fitting in the form of a cable termination, according to a first embodiment of the invention mounted to it. The cable termination comprises a geometric field control with a deflector arrangement comprising a closing and an opening deflector arranged in the joint body and a stress-cone respectively.
- Fig. 2: A second embodiment of a cable fitting in the form of a cable termination, according to the invention, comprising a geometric field control with a deflector arrangement comprising a lower and an upper part arranged in the joint body.
- Fig. 3: A third embodiment of a cable fitting in the form of a cable termination, according to the invention, comprising a geometric field control with a deflector arrangement formed by a cover of an hourglass shaped section of the joint body.
- Fig. 4: A fourth embodiment of a cable fitting in the form of a cable termination, according to the invention, comprising a geometric field control with a continued electrode in the form of a self-supporting electrode.
- Fig. 5: A fifth embodiment of a cable fitting in the form of a cable termination, according to the invention, comprising a geometric field control with a deflector arrangement only partially embedded in the joint body insulator.
- Fig. 6: A sixth embodiment of a cable fitting in the form of a cable termination, according to the invention, comprising a geometric field control with a continued electrode, realized by the cover.

In the figures, the same components are given the same reference symbols.

### Preferred embodiments

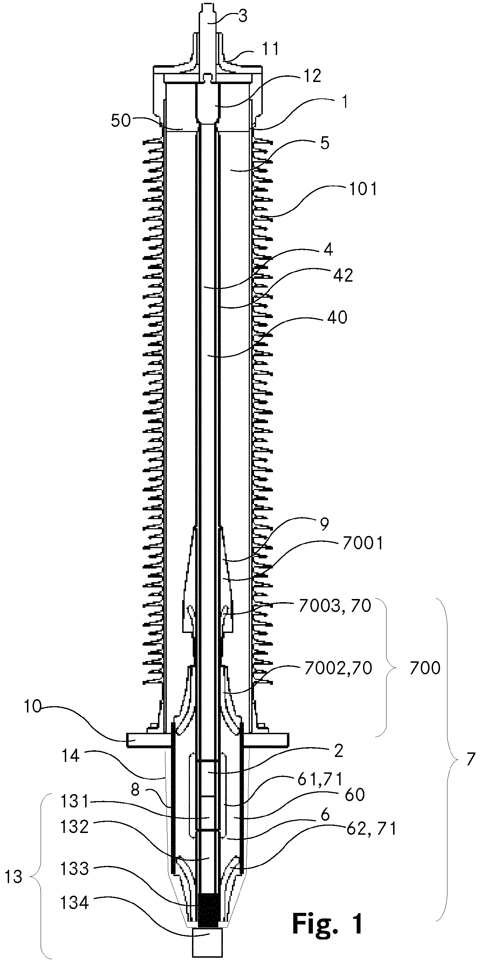

Figure 1 depicts a cable end with a cable fitting in the form of a cable termination according to a first embodiment of the invention mounted to it. The cable termination comprises a geometric field control 7 with a deflector arrangement 700 comprising a closing deflector 7002 and an opening deflector 7003 arranged in the joint body 6 and in a stress-cone 9, respectively. There is further a cover 8 applied in the form of a semiconductive paint on the outside of the joint body 6. The cover 8 extends from a few centimetres below the upper end of the lower electrode 62 into the outer insulator 1. In the embodiment of Figure 1, the cover 8 is isolated from the lower electrode 62 and the closing deflector 7002 by a layer of joint body insulation 60 but touches and is consequently in direct electrical contact with the fixing flange 10.

The high voltage cable 13 comprises, from the inside to the outside, a protective layer 134, an outer semiconductive layer 133, an insulation layer 132 and a cable conductor 131. Towards the cable end, the different layers of the high voltage cable 13 are exposed: the protective layer 134 is the outer layer of the cable outside of the joint body 6. It protects the cable from the environment. The outer semicondcutive layer 133 is exposed in the contact region of the lower electrode 62. Further towards the sliding contact 2, the insulation layer 132 is exposed until the lower end of the sliding contact 2. The exposed cable conductor 131 is inserted in the sliding contact 2 and establishes the electrical contact with the conductor 40 of the connecting element 4 which is also in electrical contact with the sliding contact 2.

The lower electrode 62 is embedded in the joint body insulator 60. The lower electrode 62 is a deflector in the shape of a cone with an outer diameter, which increases faster than linear with decreasing distance towards the central electrode 61 and the sliding contact 2. The central electrode 61 is tube-shaped with rounded ends on both sides. The joint body 6 comprises a central duct of a constant diameter. The lower electrode 62 forms the boundary of this duct in the contact region of the lower electrode 62 and the central electrode 61 forms the boundary of this duct in the centre of the joint body 6. The lower electrode 62 and the central electrode 61 are separated by the joint body insulator 60 in which they are both embedded. In the case at hand, the lower electrode 62 and the central electrode 61 are made of silicone rubber with an additive such as carbon black to become semiconductive while the joint body insulator 60 is made of silicon rubber without conductive additive such that it is an insulator. The length of the central electrode 61 is slightly longer than then length of the sliding contract 2.

The sliding contact 2 is arranged inside the duct of the joint body 6 such that it is all along its length surrounded by the central electrode 61. The sliding contact 2 is made of conductive material, preferably aluminium or copper, and the central electrode 61 is pressed upon it, such that an electrical contact between sliding contact 2 and central electrode 61 is ensured.

In the case shown in Figure 1, the joint body 6 comprises a closing deflector 7002. The closing deflector 7002 is in geometry and arrangement, symmetric to the lower electrode 62. The symmetry plane is perpendicular to the longitudinal extent of the joint body 6 and crosses the joint body in the middle of the central electrode 61. The joint body insulator 60 shows the same symmetry.

In another embodiment, the symmetry is broken only by the cover 8, which is isolated from the lower electrode 62 by a layer of joint body insulation 60, but in direct contact with the closing deflector 7002 and the fixing flange 10. In this embodiment, the fixing flange 10 can be used to ground the deflector arrangement 700 using the conductivity or semiconductivity of the cover 8.

The connecting element 4 extends in the continuation of the high voltage cable 13. The connecting element 4 comprises a conductor 40, which is surrounded by an insulating layer 42. The conductor 40 of the connecting element 4 is exposed where it is inserted into the sliding contact 2. The joint body 6 is consequently partially arranged on the high voltage cable 13 and partially on the connecting element 4.

Above the upper end of the joint body 6, a stress cone 9 is arranged on the connecting element 4. The stress cone 9 comprises an opening deflector 7003 embedded in a deflector arrangement insulator 7001. The stress cone 9 has a conical outer shape with the pointed end oriented towards the terminal 3 and away from the joint body 6. The opening deflector 7003 is preferably made of semiconductive silicon rubber. The deflector arrangement insulator 7001 is preferably made of insulating silicon rubber.

The geometry of the opening deflector 7003 is in principle similar to the geometry of the lower electrode 62: However, the amount of increase in the diameter with increasing height may differ between the lower electrode 62 and the opening deflector 7003. In the case shown in Figure 1, the opening deflector 7003 opens slower than the lower electrode 62 and the maximal opening is smaller than the maximal opening of the lower electrode 62. Different geometries are however possible, as the design of the opening deflector 7003 is essentially independent of the design of the lower electrode 62 and can be optimised with respect to the desired electrical field in the upper part of the termination.

In Figure 1, the opening deflector 7003 extends on its lower end in a sleeve like section, which surrounds the insulating layer 42 of the connecting element 4. At least a part of the contact region of the closing deflector 7002 is arranged onto this sleeve like section of the opening deflector 7003. Thereby, the opening deflector 7003 and the closing deflector 7002 are in electrical contact with each other and it is ensured that they are on the same potential during use of the termination.

In an alternative embodiment, a conductive or semiconductive layer surrounds the insulating layer 42 of the connecting element 4 in and between the contact regions of the closing deflector 7002 and the opening deflector 7003 and replaces the sleeve-like section.

In both embodiments, the closing deflector 7002 and the opening deflector 7003 form a deflector arrangement 700.

An outer insulator 1, made of composite material such as glass fibre reinforced epoxy, having a tubular shape with a constant inner diameter is mounted to a fixing flange 10. The fixing flange 10 is a flat, ring-shaped metal plate. The inner diameter of the fixing flange 10 is only slightly larger than the outer diameter of the joint body 6. The inner diameter of the outer insulator 1 is greater than the inner diameter of the fixing flange 10. The outer diameter of the fixing flange 10 is greater than the outer diameter of the outer insulator 1.

The outer insulator 1 is on its outside equipped with sheds 101 made of silicone rubber, which increase the creeping distance between the terminal 3 and the fixing flange 10.

The joint body 6 is arranged in such a way with respect to the outer insulator 1 that the central electrode 61 and the lower electrode 62 are outside of the outer insulator 1 while the closing deflector 7002 is inside the outer insulator 1. The cover 8 is partially an inner and partially an outer electrode, as it located partially inside and outside into the outer insulator 1.

Preferably, the closing deflector 7002 contacts the fixing flange 10 in the region of its maximum diameter. In another embodiment, the sleeve like section of the opening deflector 7003 or the conductive or semiconductive layer surrounds the insulating layer 42 of the connecting element 4 are in electrical contact with the fixing flange 10 via a wire, being an example of a conductor element, or via the cover 8.

Because of this arrangement, part of the cover 8, the lower electrode 62 and the central electrode 61 are outer electrodes 71 while another part of the cover 8, the deflector arrangement 700 comprising the closing deflector 7002 and the opening deflector 7003 are inner electrodes 70. The outer and the inner electrodes 71 and 70, and therefore the cover 8, the lower electrode 62, the central electrode 61, the closing deflector 7002 and the opening deflector 7003 form the geometric field control 7 in this embodiment.

The connecting element 4 extends through the outer insulator 1 and at its upper end, the terminal 3 is connected with the help of the connection piece 12. The outer insulator 1 is filled, up to a filling level 50, with an insulating filling 5. The filling 5 is sticky and stabilizes the joint body 6, the stress cone 9 and the connecting element 4 with respect to the outer insulator 1. The filling level 50 is only a few centimetres, preferably only less than 5 cm, below the lower end of the connection piece 12 and therefore clearly above the upper end of all inner electrodes 70 and in direct contact with the connecting element 4. The connection piece 12 and the terminal 3 are both connected to a lid 11, which is fixed to the outer insulator 1. Thereby, there is a small volume inside with outer insulator 1 which is above the filling level 50 and which is filled with air or another gas. This volume allows the filling 5 to change its volume in response to thermal changes.

In the shown embodiment, a protection box 14 is arranged around the part of the joint body 6 outside of the outer insulator 1. The protection box 14 protects the joint body against the weather, animals and UV radiation. However, the protection box 14 does not hinder the joint body from moving a few centimetres with respect to the joint body or from expanding by a few percent in radial direction.

The sliding contact 2 can make use of any know method to connect high voltage conductors without direct access. For example, the sliding contact 2 comprises barbs, which interact directly with the cable conductor 131 or with an adapter piece mounted on the cable conductor 131.

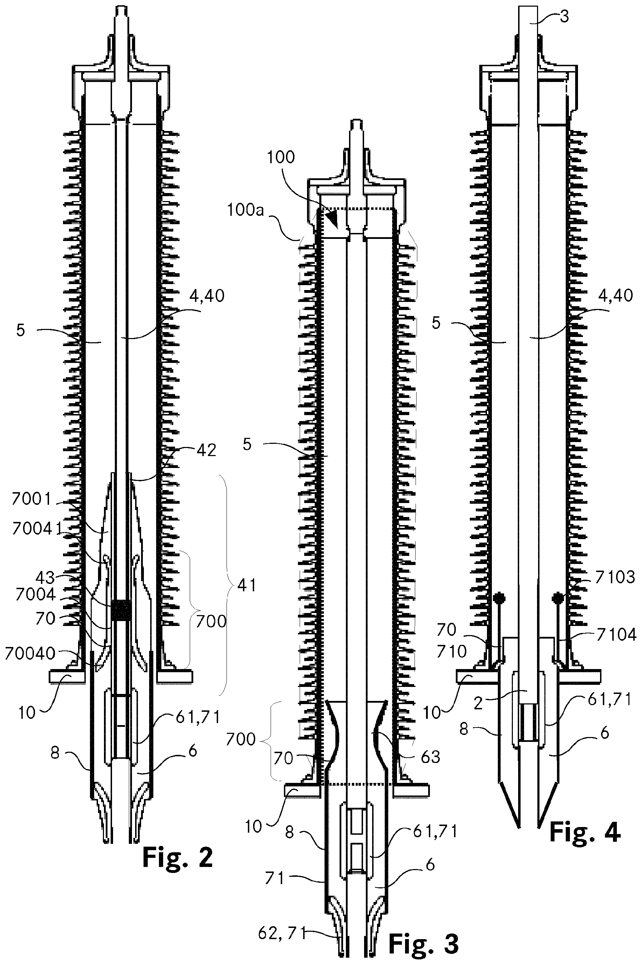

Figure 2 depicts a second embodiment of a cable fitting in the form of a cable termination according to the invention, comprising a geometric field control 7 with a deflector arrangement 700. The deflector arrangement 700 comprises a combined deflector 7004 with a lower and an upper part 70040, 70041 arranged in the joint body 6.

The main difference to the first embodiment is in the shape of the joint body 6 and the deflector arrangement 700: The stress cone 9 and the joint body 6 of the second embodiment are combined in a single joint body 6. This joint body 6 is asymmetric with respect to the middle of the central electrode 61: While the geometry of the lower part is similar to the one of Figure 1, the upper part is elongated and extends as far towards the terminal 3 as the stress cone 9 of Figure 1. The deflector arrangement insulator 7001 is the same as the joint body insulator 60. The deflector arrangement 700 comprises only one electrode in the shape of a combined deflector 7004. The combined deflector 7004 comprises a lower part 70040 with a geometry similar to the geometry of the closing deflector 7002 of Figure 1 and an upper part 70041 with a geometry similar to the geometry of the opening deflector 7003 of Figure 1. The two parts are connected to a single combined deflector 7004 by a tube-like section. This tube-like section comprises a contact region where the combined deflector 7004 contacts the conductive or semiconductive layer 43 surrounding the insulating layer 42 of the connecting element 4. The combined deflector 7004 and the conductive or semiconductive layer 43 can be in electrical contact with the fixing flange 10 or another connection point by a conductor element, for example a wire arranged in the shadow of the combined deflector 7004.

The joint body 6 of Figure 2 is equipped with a semiconductive coating which forms a cover 8. Similar to Figure 1, the cover extends from a height just below the height of the upper end of the lower electrode 62 upwards into the outer insulator 1 up to a height just above the lower end of the lower part 70040 of the deflector arrangement 700. However, in this case, there is no direct contact between the cover 8 and the fixing flange 10.

In the embodiment shown in Figure 2, the inner diameter of the fixing flange 10 is equal to the inner diameter of the outer insulator 1. While the joint body 6 is securely fixed to the outer insulator 1 by the filling 5 once the filling 5 is cured, a sealing may be needed during the production of a termination according to this embodiment to prevent the precursor material from flowing out of the outer insulator 1.

Figure 2 also illustrates another embodiment of a connecting element 4: the connecting element 4 comprises an insulating layer 42 only in a lower section 41 while above this lower section 41, the conductor 40 is exposed and in direct contact with the filling 5. In the case shown in Figure 2, the lower section 41 of the connecting element 4 extends from the sliding contact 2 up to the upper end of the joint body 6. In other embodiments the lower section 41 of the connecting element 4 extends from the sliding contact 2 up to the upper end of the stress cone 9. The insulating layer 42 of the connecting element 4 prevents in these cases that the inner electrodes 70 are in contact with the conductor 40 of the connecting element 4.

Figure 3 depicts a third embodiment of a cable fitting in the form of a cable termination according to the invention, comprising a geometric field control 7 with a deflector arrangement 700 formed by a cover 8 of an hourglass shaped section 63 of the joint body 6.

In this embodiment, the deflector arrangement 700 is formed by a cover 8 of a suitably formed joint body 6. The cover 8 is preferably a conductive or semiconductive paint or a conductive or semiconductive tape applied onto the joint body 6. In order for this cover 8 to act as deflector arrangement 700, the outside of the joint body 6 follows the shape of a combined deflector 7004 as described with respect to Figure 2. This shape, opening in a conical way to the top and to the bottom and comprising a central part with a small circumference, is called hourglass-shaped. The cover 8 forming the deflector arrangement 700 and thereby the inner electrode 70 in the hourglass-shaped section of the joint body can continue on the outside of the joint body 6 out of the outer insulator 1. In the case shown, the cover 8 extends down to below the height of the maximal diameter of the lower electrode 62. The cover 8 is partially an outer electrode 71 and partially an inner electrode 70.

In another embodiment, the cover 8 extends further down along the outer surface of the joint body 6 and forms thereby the lower electrode 62, too.

To produce a deflector arrangement 700 according to this embodiment, is particularly simple as only the cover 8 has to be applied onto the joint body in order to form the inner electrodes.

Figure 3 also illustrates the concept of "inside" and "outside" the outer insulator 1. The inside 100 of the outer insulator 1 is in Figure 3 surrounded by a dashed line: The outer insulator 1 is of tubular shape and comprises therefore openings at its top and bottom and a hollow interior which connects the opening at the top and at the bottom. Everything in this hollow interior connecting the opening at the top and at the bottom is inside the outer insulator 100. Figure 3 shows an outer insulator 1 in the shape of a tube with constant diameter and an outside with sheds 101. There are sheds 101 extending further out, in essentially radial direction, all along the length of the outer insulator 1. The convex hull 100a is a cylinder with a constant diameter equal to the maximum extent of the sheds 101 and conical sections at the top and at the bottom, where the convex hull 100a extends from the edge of the tube to the uppermost or lowermost shed 101. To define the openings, one looks preferably at the straight lines, which can pass through the inside of the outer insulator 100: In the geometry at hand, obviously all lines parallel to the longitudinal axis of the outer insulator and which are arranged in a distance of less than the inner radius of the outer insulator from the longitudinal axis belongs to the lines defining the openings. All of these lines cross the convex hull 100a of the outer insulator is regions where this convex hull 100a is flat. Therefore, there are two planar circles, arranged parallel to each other, which are candidates for the openings. One can easily check that every point on one of these circles can be connected with a straight line with every point on the other circle and that therefore these circles are the openings of the outer insulator according to the preferred definition of opening. Therefore, these circles are the boundary between the inside 100 and the outside of the outer insulator 1. In the case shown in Figure 3, the inside 100 of the outer insulator 1 is therefore a circular cylinder with a diameter equal to the inner diameter of the outer insulator 1.

Figure 4 depicts a fourth embodiment of a cable fitting in the form of a cable termination according to the invention, comprising a geometric field control 7 with a self-supporting electrode 7104. Besides the difference regarding the geometric field control 7, Figure 4 shows an example of the connecting element 4 which is made of the conductor 40 only and which forms the terminal 3. There is consequently no connection piece 12. Further, the sliding contact 2 is formed directly from the connecting element 4. In the embodiment, the conductor 40 of the connecting element 4 is a rod.

While Figure 4 illustrates both, a different geometric field control 7 and a different embodiment of the connecting element 4, the terminal 3 and the sliding contact 2, all of these features are independent of each other: For example, all geometric field control embodiment 7 where the inner electrodes 70 are separated by an layer of joint body insulator 60, deflector arrangement insulator 7001 or insulating filling 5 from the connecting element can be combined with a connecting element 4 without insulating layer 42. It is also possible to form the sliding contact 2 out of the conductor 40 of the connecting element 4 as shown in Figure 4, independent of the embodiment of the geometric field control 7 and independent of the presence of an insulating layer 42 of the connecting element 4. The same is true for the terminal 3 and the presence or absence of a connection piece 12.

The geometric field control 7 comprises an inner electrode 70, which is outside of the joint body 6 and surrounded by the filling 5. The inner electrode 70 is mounted to the fixing flange 10. The inner electrode 70 is made of a self-supporting conductive or semiconductive material such as a metal. The inner electrode 70 of this embodiment is therefore a self-supporting electrode 7104. The self-supporting electrode 7104 comprises a tubular section which surrounds the inner part of the joint body 6 and which extends up to a height above the height of the upper end of the joint body 6. Also the cover 8 and the self-supporting electrode 7104 are arranged coaxially to each other along the small section along which the cover 8 extends into the outer insulator 1. In the embodiment shown in Figure 4, the cover 8 is surrounded by the self-supporting electrode 7104, while in the embodiments shown in Figures 1-3, the cover 8 surrounds a part of the deflector arrangement 700. The self-supporting electrode 7104 comprises an upper end 7103, which is rounded.

The joint body shown in Figure 4 comprises a cover 8, which covers the lower end of the joint body and which continues to cover the surface of the joint body 1 up to a height which is inside the outer insulator 1. The lower end of the joint body 6 is conical and increases its outer diameter towards the sliding contact 2. The cover 8 of this lower end of the joint body 6 forms thereby the lower electrode 62.

In the shown embodiment, the cover 8 is in electrical contact with the fixing flange 10. Thereby, the self-supporting electrode 7104 and the cover 8 are on the same potential. The joint body 6 comprises only the cover 8 and the central electrode 61. There is no closing deflector 7002 or deflector arrangement 700 necessary in the embodiment of figure 4, although a combination of a closing deflector 7002 and a self-supporting electrode 7104 is another embodiment of a termination according to the invention. In the case shown in Figure 4, the outer shape of the joint body 6 is asymmetric with respect to a plane through the center of the central electrode 61 and perpendicular to the longitudinal axis of the joint body 6 as only the lower end of the joint body 6 is conical while the upper end is cylindrical.

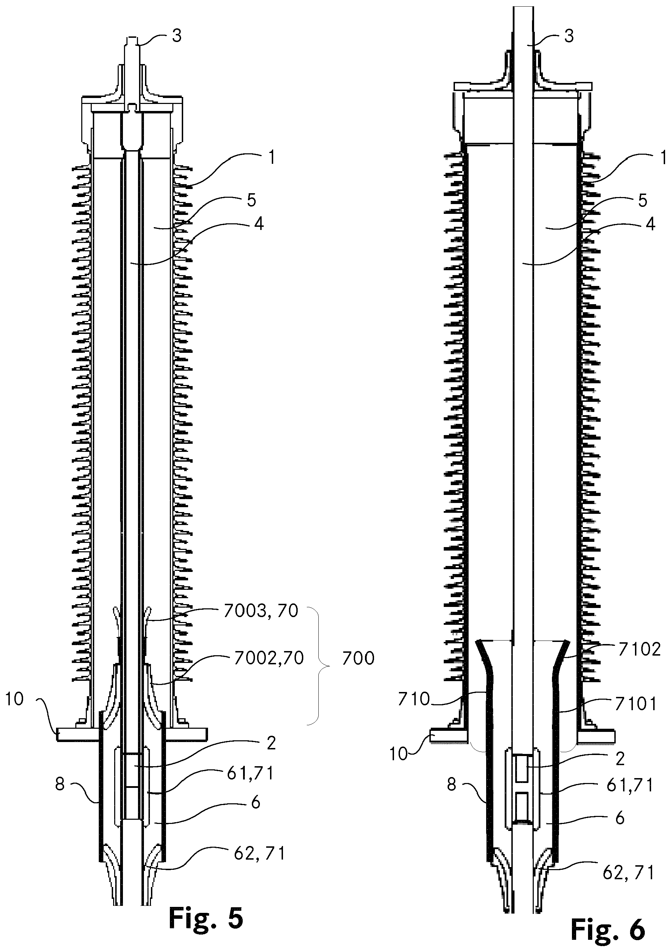

Figure 5 illustrates a fifth embodiment of a cable fitting in the form of a termination according to the invention. The termination is very similar to the embodiment shown in Figure 1. However, the geometric field control 7 comprises a deflector arrangement 700 which is only partially embedded in an elastomeric insulator such as the joint body insulator 60 or the deflector arrangement insulator 7001. The opening deflector 7003 is exposed to the filling 5.

Figure 6 depicts a sixth embodiment of a cable fitting in the form of a termination according to the invention. Similar to Figure 3, the geometric field control 7 is realised by the cover 8. Here the cover 8 form a continued electrode 710 with a cylindrical part 7101 and a conical part 7102. While the conical part 7102 is formed as the upper part 70041 of the deflector arrangement 700 of Fig.3, there is a difference in the shape of the cylindrical part 7101 of the sixth embodiment and the lower part 70040 of the Fig.3's deflector arrangement 700: While the outer diameter of the cover 8 decreases with increasing height in the lower part 70040 of the Fig.3's deflector arrangement 700, the outer diameter of the cover 8 remains constant with increasing height in the case of the cylindrical part 7101 of the sixth embodiment. As can easily be seen, the joint body 6 of the sixth embodiment is monotonically increasing with increasing height. This property makes is particularly easy to mould.

Figure 6 illustrates further an embodiment, where the connection element 4 increased its length with respect to the outer insulator 1 due to heat. As the connection element 4 is connected to the lid and the lid is connected to the outer insulator 1, this elongation of the connection element 4 pushes the joint body slightly further out of the outer insulator. 1. The filling 5 sticks to the inner walls of the outer diameter 1 as well as to the joint body 6 and therefore bulges slightly out of the outer termination. The elastic properties of the filling 5 and the joint body 6 ensure that such deformations can occur without creating voids in the filling 5 and therefore without any harm to the termination.

In summary, it is to be noted that the outer insulator 1 has a different shape in different embodiments. For example, the outer insulator 1 could have an inner and/or outer diameter witch changes along the extent of its longitudinal axis such that the resulting outer insulator 1 is conical or has a hourglass-shape for example. Further, different embodiments of connecting elements 4 can be combined with different embodiments of geometric field controls 7. Embedded inner electrodes 70 do not need to be made of an elastomeric conductive or semiconductive material as it is possible to arrange rigid, inner electrodes on the connecting element 4 and to mould the deflector arrangement insulator 7001 or the joint body insulator around them and the connecting element 4.

## Claims

1. Cable fitting comprising
a) An **outer insulator (1)** of tubular shape
b) **a sliding contact (2),** which is suitable to be connected to a cable conductor (131) of a high voltage cable (13) and
c) **A terminal (3),**
d) A preinstalled **connecting element (4),**
i) which comprises a **conductor (40),** which connects the sliding contact (2) with the terminal (3)
e) An **insulating filling (5),** filling the otherwise unoccupied space inside the outer insulator (1) up to a **filling level (50),**
**characterized in that** the cable fitting comprises
f) a preinstalled **joint body** (6) comprising
i) an elastomeric joint body insulator (60), preferably made of silicon rubber, which is at least partially covered by **a cover** (8) made of conductive or semiconductive material and wherein the cover preferably extends at least from the height of an upper end of a lower electrode (62) upwards into the outer insulator (1) and
ii) preferably, **a central electrode** (61) surrounding the sliding contact (2), being embedded in an elastomeric **joint body insulator (60),** and
iii) the **lower electrode (62)** arranged at least partially below the sliding contact (2) and, preferably arranged at least partially below the central electrode (61), preferably in the shape of a deflector embedded in the joint body insulator (60) and opening towards the sliding contact (2),
g) a **geometric field control (7)** comprising **at least one inner electrode (70) and at least one outer electrode (71),**
i) wherein all inner electrodes (70) are located inside the outer insulator (1),
ii) wherein all outer electrodes (71) and preferably the sliding contact (2) are arranged below and outside the outer insulator (1)
iii) wherein the joint body (6) is arranged partially inside and partially outside the outer insulator (1).

2. Cable fitting according to any one of the previous claims, wherein the lower electrode (62), and preferably the central electrode (61), is a made of elastomeric, conductive or semiconductive material and is embedded in the joint body insulator (60).

3. Cable fitting according to any one of the previous claims, wherein the inner electrode (70) of the geometric field (7) control comprises **a continued electrode (710),** which comprises
a) a cylindrical part (7101) either continuing the cover (8) or being arranged at least partially coaxially to the cover (8) and
b) either a conical part (7102) widening towards the terminal (3), or a rounded upper end (7103).

4. Cable fitting according to any one of the previous claims, wherein the inner electrode (70) of the geometric field (7) control comprises a **deflector arrangement (700),** which is preferably embedded in the filling (5) or in an elastomeric **deflector arrangement insulator (7001),** preferably silicone rubber.

5. Cable fitting according to claim 4, wherein
a) the connecting element (4) comprises at least in a **lower section** (41) an **insulating layer** (42) on its outside and
b) wherein the deflector arrangement (700) is arranged onto the lower section (41) of the connecting element (4) in such a way that an electrical contact between the conductor (40) and the deflector arrangement (700) is prevented by the insulating layer (42)
c) and wherein preferably, the connecting element (4) comprises at least partially a **conductive or semiconductive layer** (43) surrounding the insulating layer (42) on its outside, which establishes an electrical contact with all deflectors of the deflector arrangement (700).

6. Cable fitting according to any one of claims 4 to 5, wherein
a) the deflector arrangement (700) comprises a **closing deflector** (7002) opening towards the sliding contact (2) and being part of the joint body (6) and **an opening deflector** (7003) opening towards the terminal (3) of the cable fitting and
b) whereby there is preferably an electrical contact established between the closing and the opening deflector (7002, 7003) and
c) whereby preferably the opening and/or the closing deflector (7002, 7003), are made of elastomeric, conductive or semiconductive material and
d) whereby the opening deflector is preferably part of a stress cone (9).

7. Cable fitting according to any one of claims 4 to 5, wherein the deflector arrangement (700) comprises a **combined deflector** (7004) comprising **a lower part** (70040) opening towards the sliding contact and **an upper part** (70041) opening towards the terminal (3) of the cable fitting, whereby the combined deflector (7004) is preferably made of elastomeric conductive or semiconductive material and being part of the joint body (6).

8. Cable fitting according to any one of claims 4-7, wherein the deflector arrangement (700) is realised by the cover (8) of **a hourglass shaped section** (63) of the joint body (6) which is arranged inside the outer insulator (1).

9. Cable fitting according to claim 3, wherein the joint body (6) continues cylindrically and with a constant diameter inside the outer insulator (1) followed by a conical section widening towards the terminal (3) and wherein the cover (8) extends along the joint body (6) forming thereby the continued electrode (710).

10. Cable fitting according to claim 3, wherein the continued electrode (710) comprises a **self-supporting electrode (7104),** made of a conductive or semiconductive, rigid material, preferably a metal, extending from the height of the lower end of the outer insulator (1) and extending inside the outer insulator (1), whereby an upper end of the of the self-supporting electrode (7103) is preferably rounded and whereby the self-supporting electrode (7104) preferably surrounds a part of the joint body (6) which extends inside the outer insulator (1) and which comprises the cover (8).

11. Cable fitting according to any one of the previous claims, wherein the insulating filling (5) is made of a gel or a solid, preferably an elastomer, such that the resulting cable fitting is a dry-type fitting, wherein the gel or the solid is formed by curing a precursor material of the gel or the solid.

12. Cable fitting according to any one of the previous claims, wherein the filling level (50) is such that all inner electrodes (70) are embedded in the filling and that there is a direct contact between the connecting element and the filling.

13. Cable end comprising
a) a cable fitting according to one of the previous claims and
b) a high voltage cable (13) comprising
i) a cable conductor (131)
ii) an insulation layer (132) made of a polymer surrounding the cable conductor (131)
iii) an outer semiconductive layer (133) surrounding the insulation layer (132),
iv) a protective layer (134) surrounding the outer semiconductive layer (133),
v) preferably, an inner semiconductive layer in direct contact with and surrounding the cable conductor (131), which is arranged between the cable conductor (131) and the insulation layer (132),
vi) preferably, a cable sheath surrounding the outer semiconductive layer (133), which is arranged between the outer semiconductive layer (133) and the protective layer (134)
c) whereby the lower electrode (62) contacts, preferably by being arranged onto, part of the outer semiconductive layer (133) or part of the cable sheath, and
d) whereby the cable conductor (131) contacts the conductor of the connecting element (4) through the sliding contact (2) to establish a current path and whereby the cable conductor contacts (131), at least indirectly, the central electrode (61) in such a way that both are on the same electric potential.

14. Method to fabricate a cable fitting according to claim 1 comprising the steps of
a) arranging the geometric field control (7) and the joint body (6) on or around the connecting element (4) and the sliding contact (2)
b) arranging the outer insulator (1) in the desired position with respect to the joint body (6) and the connecting element (4)
c) if needed, arranging **a sealing** between the lower end of the outer insulator (1) and the joint body (6)
d) pouring a precursor material of the insulating filling in the outer insulator (1) such that the space between the outer insulator (1) and the connecting element (4) and the joint body (6) is filled with the precursor material of the insulating filling
e) curing the precursor material of the insulating filling such the insulating filling (5) results which is a gel or a solid and which fills the outer insulator (1) up to the filling level (50)
f) preferably, connecting the terminal (3) of the cable fitting to the connecting element (4), mounting the lid (11) on the upper end of the outer insulator (1) and mounting the terminal (3) of the cable fitting to the lid (11)
g) preferably, electrically testing of the cable fitting.

15. Method for installing a cable fitting according to claim 1 on a dry-type high voltage cable comprising the steps of
a) exposing the cable conductor (131) of the high voltage cable (13) over a distance of approximately half of the length of the sliding contact (2) and preferably, preparing it with a suitable adapter piece to connect the cable conductor (131) to the sliding contact (2)
b) exposing the insulation layer (132) of the high voltage cable over a distance approximately equal to the distance between the lower end of the sliding contact (2) and upper end of a contact region of the lower electrode (62)
c) exposing the outer semiconductive (133) and/or shield layer of the high voltage cable such that an electrical contact between the cable shield and/or the outer semiconductive layer (133) of the high voltage cable and the lower electrode (62) can be established once the cable is connected to the sliding contact (2)
d) pushing the cable into the joint body (6) such that the cable conductor (131) of the high voltage cable is connected to the sliding contact (2)
e) preferably, mounting a protection box (14) or a protection sleeve over the part of the joint body (6) outside the outer insulator.
